# EUROPEAN PATENT SPECIFICATION

(11) **EP 2 437 182 B1**
(45) Date of publication and mention of the grant of the patent: **01.04.2020**
(21) Application number: 11176101.1
(22) Date of filing: 01.08.2011
(51) Int. Cl.: G06F 17/21

(54) **Resolving page references in layout dependent documents**
Lösung von Seitenreferenzen in layoutabhängigen Dokumenten
Résolution des références de page dans des documents dépendant de la présentation

(30) Priority: 30.09.2010 US 895592
(43) Date of publication of application: 04.04.2012
(73) Proprietor: Konica Minolta Laboratory U.S.A., Inc., San Mateo CA 94403 (US)
(72) Inventor: Grams, Jason James, San Mateo, CA California 94403 (US)
(74) Representative: Gille Hrabal

(56) References cited:
- US-A- 4 792 919
- US-A- 6 101 513
- US-A1- 2007 050 403
- US-A1- 2008 278 756
- US-A1- 2008 285 072
- US-B1- 7 301 656

## Description

### BACKGROUND

Documents stored in office productivity based formats typically do not have a set page layout. As a result, the page upon which an item of the document can appear is entirely dependent upon the method used to lay out the textual data. In addition, certain components of these documents can contain references to other portions of the document. In order for these references to be accurate, the page(s) upon which the referenced items occur needs to be known when the reference is processed.

In office-productivity applications, this information is known implicitly, as the entire document is available for processing at any given time. However, in a printer, the document must be processed linearly, and therefore references to items that occur after the references might not accurately identify the referenced items.

US-4,792,919 discloses a word processor comprising a keyboard for inputting characters, a text compiling unit for compiling a text by the characters inputted from the keyboard, a memory for storing the text compiled by the text compiling unit, a designation unit for designating ends of chapters or phrases of the text when the text is compiled by the text compiling unit, and a table of contents compiling unit for compiling a table of contents corresponding to the chapters or the paragraphs of the text in accordance with the designation of the ends of the chapters or the paragraphs by the designation unit.

This document is a typical representative of the office-productivity applications mentioned above.

US 2008/0285072 A1 discloses a printer which includes a print document receiving unit that receives document data, a document analysis unit that generates output document data from the document data, a print mode determination unit that selects a print mode to be executed by the document analysis unit, a layout processing unit that processes the output document data, and a print execution unit that executes printing.

### SUMMARY

In general, in one aspect, the invention relates to a method for resolving references in electronic documents comprising the features of claim 1.

In general, in one aspect, the invention relates to a non-transitory computer readable storage medium storing instructions for resolving references in electronic documents comprising the features of claim 8.

In general, in one aspect, the invention relates to a system for resolving references in electronic documents comprising the features of claim 15.

Other aspects of the invention will be apparent from the following description and the appended claims.

### BRIEF DESCRIPTION OF DRAWINGS

FIG. 1 shows a system in accordance with one or more embodiments of the invention.
FIG. 2 shows a flowchart in accordance with one or more embodiments of the invention.
FIGS. 3, 4A , and 4B show examples in accordance with one or more embodiments of the invention.
FIG. 5 shows a computer system in accordance with one or more embodiments of the invention.

### DETAILED DESCRIPTION

Specific embodiments or at least aspects of the invention will now be described in detail with reference to the accompanying figures. Like elements in the various figures are denoted by like reference numerals for consistency.

In the following detailed description of embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid unnecessarily complicating the description.

In general, embodiments of the invention provide a system and method for resolving references in electronic documents. Specifically, prior to the processing of an electronic document by a layout engine, the reference is substituted with a preciously recorded page number. The previously recorded page number corresponds to the page on which the referenced item was placed during a previous rendering of the electronic document. Following the processing of the electronic document by the layout engine, the page number of the latest page on which the referenced item was placed is compared to the substituted value. If no match exists, the process is repeated but using the latest page number as a substitution for the reference.

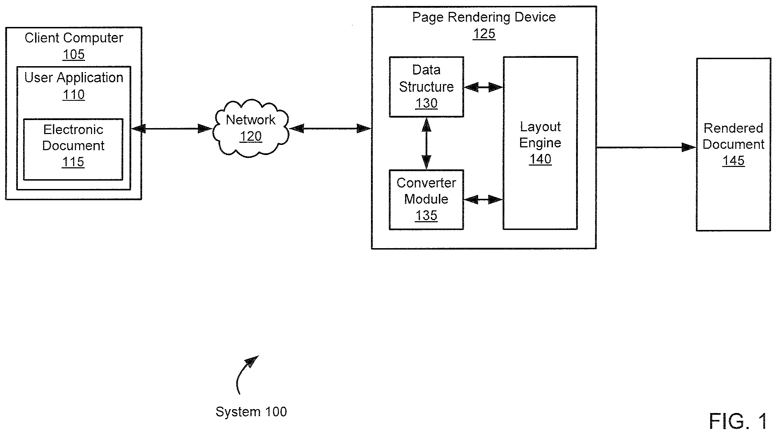

FIG. 1 shows a system (100) in accordance with one or more embodiments of the invention. As shown in FIG. 1, the system (100) has multiple components including a page rendering device (125) and a client computer (105). The page rendering device (125) may be, for example, a printer, an electronic reader, etc. The client computer (105) may be a personal computer (PC), a desktop computer, a mainframe, a server, a telephone, a kiosk, a cable box, a personal digital assistant (PDA), a mobile phone, a smart phone, etc. There may be a direct connection (e.g., universal serial bus (USB) connection) between the client computer (105) and the page rendering device (125). Alternatively, the client computer (105) and the page rendering device (125) may be connected using a network (120) having wired and/or wireless segments. In one or more embodiments of the invention, the page rendering device (125) is part of a photocopier (not shown). In one or more embodiments of the invention, the page rendering device (125) and the client computer (105) are part of a photocopier (not shown).

In one or more embodiments of the invention, the page rendering device (125) is located on the client computer (105). In such embodiments, the page rendering device (125) may correspond to any combination of hardware and software on the client device (105) for rendering an electronic document.

In one or more embodiments of the invention, the client computer (105) executes the user application (110). The user application (110) is a software application operated by a user and configured to obtain, input, generate, and/or print an electronic document (e.g., Electronic Document (115)) having any number of pages. Accordingly, the user application (110) may be a word-processing application, a spreadsheet application, a desktop publishing application, a graphics application, a photograph printing application, an Internet browser, etc. The user application (110) may generate new electronic documents and/or obtain previously saved electronic documents.

In one or more embodiments of the invention, a section of the electronic document (115) includes one or more references to items within the electronic document (115). When the rendered document (145) is generated based on the electronic document (115), the one or more references will be replaced with the page numbers of the pages in the rendered document (145) on which the referenced items are placed. For example, the electronic document (115) may include a table of contents section. The table of contents section will include references to the subheadings and chapter subtitles of the electronic document (115). When the rendered document (145) is generated based the electronic document (115), the references will be replaced with the page numbers of the pages in the rendered document (145) on which the subheadings and chapter subtitles are placed.

In one or more embodiments of the invention, the electronic document (115) is represented/defined using a document markup language (e.g., ODF, OOXML, etc.). Accordingly, the references may be recorded as attributes within the tags of the document markup language. Further, the page breaks created by the user application (110) for the electronic document (115) may also be recoded within the tags of the document markup language.

In one or more embodiments of the invention, the page rendering device (125) includes a layout engine (140). The layout engine (140) is configured to calculate the positions/placement of the columns, paragraphs, sentences, words, letters, subheadings, subtitles, images, etc. of the electronic document (115) on a readable medium (e.g., paper, transparencies, microfilm, computer monitor, an electronic reader, etc.).

In one or more embodiments of the invention, the page rendering device (125) includes a convertor module (135). The convertor module (135) is configured to transform (i.e., convert) the electronic document (115) into an intermediate form or intermediate document (intermediate document) suitable for consumption by the layout engine (140). Further, the convertor module (116) may substitute references in the intermediate form with page numbers before the intermediate form is consumed by the layout engine (140).

In one or more embodiments of the invention, the data structure (130) comprises entries corresponding to each reference in the electronic document (115). Each entry may have multiple values for a reference. These multiple values (e.g., PN0, PN1, PN2, PN3, ...) correspond to the page numbers of the pages on which the referenced item was placed during previous renderings of the electronic document (115) by the layout engine (140). In one or more embodiments of the invention, the initial value(i.e.,PN0) may be estimated based on the page breaks set by the user application (110)

In one or more embodiments of the invention, in order for the references to be accurate, the page on which the referenced item is placed needs to be known when the reference is processed by the layout engine (140). However, in the page rendering device (125), the electronic document (115) is processed linearly and any references to items that occur after the references (e.g., subheadings after the table of contents section) might not accurately identify the page numbers. Accordingly, when the reference is processed by the layout engine (140), a page number previously recorded in the data structure (130) following a previous rendering is substituted for the reference. Once the layout engine (140) renders the document, the substituted value can be compared with the actual page number of the page on which the referenced item was placed. If no match exists, the process can be repeated but using the latest page number as a substitute for the reference.

In one or more embodiments of the invention, the page rendering device (125) may also contain a GUI (not shown) for displaying information associated with the printing process. The GUI may be viewed in a web browser, an application window, on a display of the page rendering device (125), and the like. The GUI may be viewed in these display technologies by a user of user application (110). The GUI may include standard display elements, including video, audio, and text, as well as interface technologies not limited to text submission on forms, voice capture, and user gesture interpretation. In one or more embodiments of the invention there may be various other display technologies used to view the GUI.

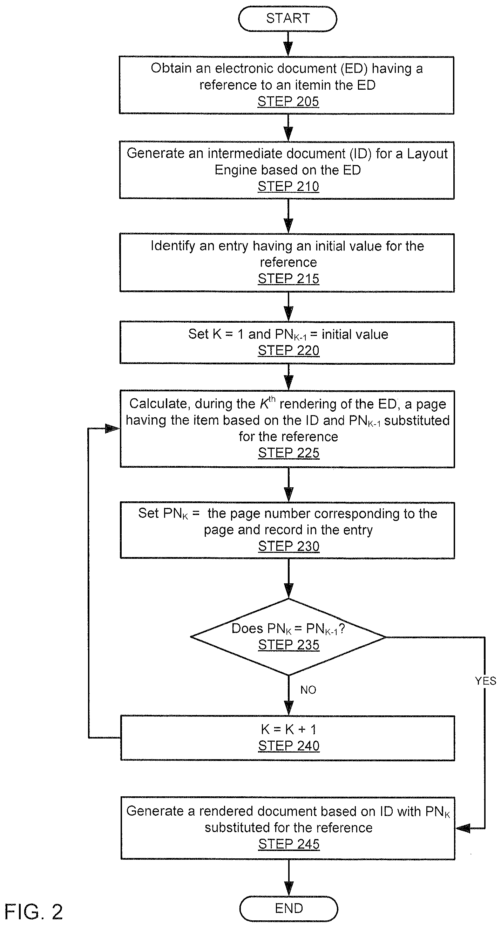

FIG. 2 shows a flowchart in accordance with one or more embodiments of the invention. The process shown in FIG. 2 may be used, for example, with the system of FIG. 1 to resolve references in electronic documents. The sequence of steps shown in FIG. 2 may differ among embodiments of the invention, and one or more of the steps may be performed in parallel and/or may be optional.

In STEP 205, an electronic document (ED) is obtained. The electronic document contains a reference to an item in the electronic document. For example, the reference may be a pointer to a chapter title or subheading within in the electronic document. Further, the reference may be located within the electronic document's table of contents. In one or more embodiments of the invention, the electronic document is represented/defined using a document markup language (e.g., ODF, OOXML, etc.). Accordingly, the properties of the electronic document and the reference(s) in the electronic document may be recorded as attributes within the tags of the document markup language.

In STEP 210, an intermediate document (ID) is generated (e.g., by the converter module (135), discussed above in reference to FIG. 1 ). An intermediate document is a document suitable for consumption by a layout engine. The intermediate document may contain the content of the electronic document, but with unresolved references.

In STEP 215, an entry for the reference is identified in a data structure external to the electronic document and the intermediate document. The entry includes an initial value for the reference. For example, the entry may have an initial value of "3". In one or more embodiments of the invention, the initial value may be estimated based on page breaks set by a user application (e.g., User Application (110), discussed above in reference to FIG. 1).

In STEP 220, the counter K is initialized to K = 1, and the value of page number_{K-1} (i.e., PN_{K-1}) is set to PN_{K-1}= PN₀ = initial value.

In STEP 225, the page having the referenced item is calculated. Specifically, the calculation is performed by the layout engine (140), discussed above in reference to FIG. 1, during a K^{th} rendering of the electronic document prior to which PN_{K-1} is substituted for the reference.

In STEP 230, the page number corresponding to the calculated page is recorded in the entry. Further, the variable PN_{K} is set to PN_{K} = page number.

In STEP 235, it is determined whether PN_{K} equals PN_{K-1}. When it is determined that PN_{K} equals PN_{K-1}, the process proceeds to STEP 245. Otherwise, when it is determined that PN_{K} does not equals PN_{K-1}, the process proceeds to STEP 240. In STEP 240, counter K is incremented by one, and the process returns to STEP 225.

In STEP 245, a rendered document is generated. The rendered document is generated based on the intermediate document with PN_{K} substituted for the reference. Generation of a rendered document may include printing of the rendered document by a page rendering device (e.g. a printer). Those skilled in the art will appreciate that there may be various other steps performed that have not been described above.

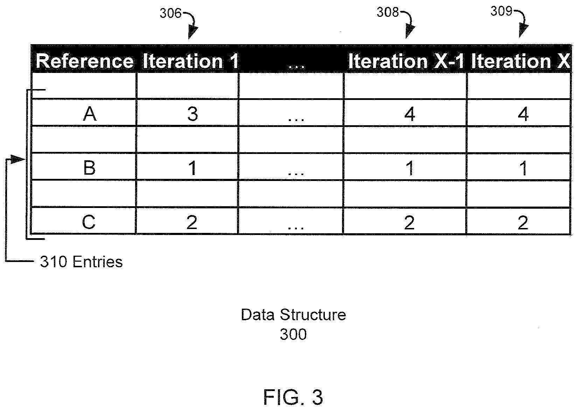

FIG. 3 shows a data structure (300) in accordance with one or more embodiments of the invention. The data structure (300) may be essentially the same as the data structure (130), discussed above in reference to FIG. 1. Each entry (310) corresponds to a different reference in the electronic document. Further, each column corresponds to a different rendering of the electronic document by the layout engine (i.e., a different iteration of the process shown in FIG. 2). As shown in FIG. 3, following the first iteration (306), the item referenced by reference A was calculated to be on page 3 of the rendered document. Following the X-1^{th} iteration (308), the item referenced by reference A was calculated to be on page 4 of the rendered document. Following the X^{th} iteration (309), the item referenced by the reference A was still calculated to be on page 4 of the rendered document. In other words, it took X iterations (i. e., X renderings of the electronic document) to finalize the location of the item referenced by reference A. In contrast, the pages having the items referenced by reference B and reference C were correctly identified following the very first iteration. In one or more embodiments of the invention, a rendered document (e.g. a hardcopy document) is generated when the location of the items referenced by the references are finalized (i.e., the page numbers have remained constant over at least the last two iterations) or the number of iterations has exceeded a predefined limit (e.g., 11 iterations)).

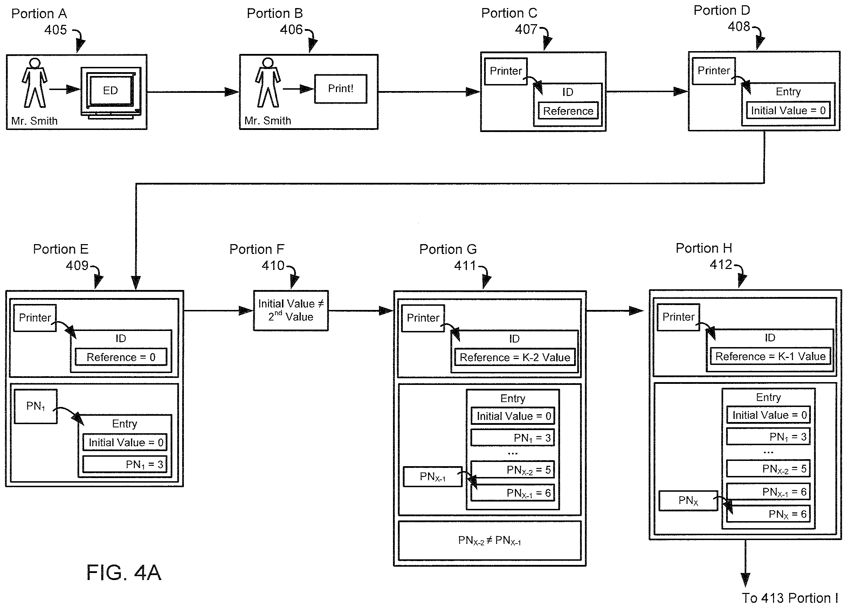

FIG. 4A shows an example in accordance with one or more embodiments of the invention. The example shown in FIG. 4A may be used, for example, with the system (100), to resolve references in electronic documents. The portions shown in FIG. 4A may differ among embodiments of the invention, and one or more of the portions may be performed in parallel and/or may be optional.

In portion A (405), Mr. Smith authors an electronic document (ED) in a user application on a client computer. The electronic document may be, for example, a word processing document. The user application may be, for example, a word processor. The client computer may be, for example, Mr. Smith's desktop computer.

In portion B (406), Mr. Smith submits a print command for the electronic document. The print command may be communicated by the user application to a printer (i.e. a page rendering device) over a network. In this example, the print command initializes the print process, and offloads the rendering process to a printer, instead of performing the rendering on the client computer.

In portion C (407), the printer generates, based on the electronic document, an intermediate document containing a reference to an item in the electronic document. The item may be located anywhere in the intermediate document, and the reference to the item may be located in, for example, a table of contents of the intermediate document.

In portion D (408), the printer creates an entry for the reference, and stores an initial value for the reference. The entry may be stored in a data structure on the printer, and the initial value may be a randomly generated number or a constant value (e.g. "0"). This is the value that will be initially substituted for the reference in the intermediate document during the initial rendering.

In portion E (409), during an initial rendering of the intermediate document with the initial value substituted for the reference, the printer calculates/identifies the page number (i.e., PN₁) of the page on which the item is placed and records the page number in the entry. PN₁ may be, for example, be "3".

In portion F (410), the printer determines that the initial value does not equal PN₁ (i.e., initial value = 0 ≠ PN1 = 3). These values are different because the page on which the referenced item is located has changed. This may occur during the rendering process when, for example, content is expanded, references are filled, and due to various other factors.

In portion G (411), during a subsequent rendering with PN_{X-2} substituted for the reference, the printer identifies the referenced item place on the page having page number PNₓ₋₁. PNₓ₋₁ is then recorded in the entry. The printer determines that PN_{X-1} does not equal PN_{X-2} and initiates another rendering.

In portion H (412), during the Xₜₕ rendering with PN_{X-1} substituted for the reference, the printer identifies the referenced item placed on the page having page number PNₓ. PNₓ is then recorded in the entry. As shown in portion H (412), PN_{X-1} = PNₓ = 6. This corresponds to the scenario where the referenced item's location has been finalized.

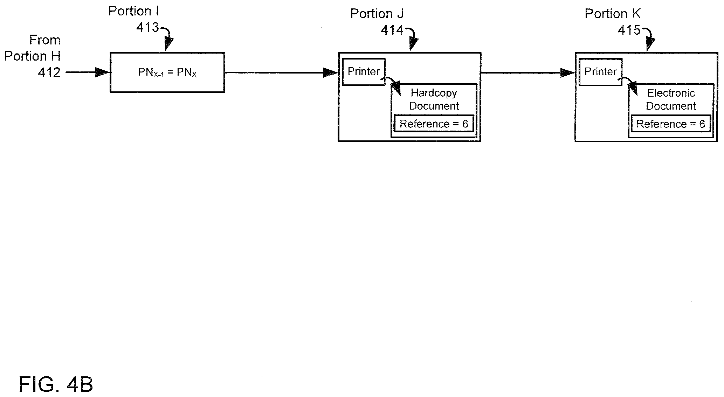

FIG. 4B shows an example in accordance with one or more embodiments of the invention. The example shown in FIG. 4B may be used, for example, with the system (100), to resolve references in electronic documents. The portions shown in FIG. 4B may differ among embodiments of the invention, and one or more of the portions may be performed in parallel and/or may be optional.

In portion l (413), the printer determines that PNₓ₋₁ = PNₓ = 6. As discussed above, this corresponds to the scenario where the referenced item's location is finalized.

In portion J (414), the printer generates a hardcopy document (i.e. a rendered document) based on the intermediate document and PNₓ substituted for the reference. Specifically, in this example, the hardcopy document is generated (and printed) with the reference set to "6".

In portion K (415), the printer modifies the electronic document to include PNₓ as a potential value for the reference. In this example, the printer modifies the electronic document to contain the value of "6" for the reference. If an attempt is made at a future time to print the electronic document, the initial value for the reference may be set to "6" in order to eliminate or at least reduce the number of iterations needed to generate the hardcopy document.

The printer may also use other similar methods for immediately identifying the correct value of the reference. For example, the printer may identify a set of page breaks in the electronic document, and set the initial values of the references to the values of the page breaks. This may produce initial values that are closer to the final values of references, and may require less rendering iterations to identify those final values. Page breaks are typically very sensitive to minor changes in layout characteristics, and may differ between different user applications. Page breaks may, however, provide for an approximation as to which page of a document contain a certain item that is referenced. The use of page breaks to set initial values may be used as part of the rendering process, or may be used in place of it. For example, if complete accuracy in the determination of values is not required, the page break values may be used in place of identifying the values of references during the rendering process. This may eliminate the need to iterate through the intermediate document multiple times in order to identify reference values. Otherwise, values derived from page breaks may be used as initial values with which to start the rendering process.

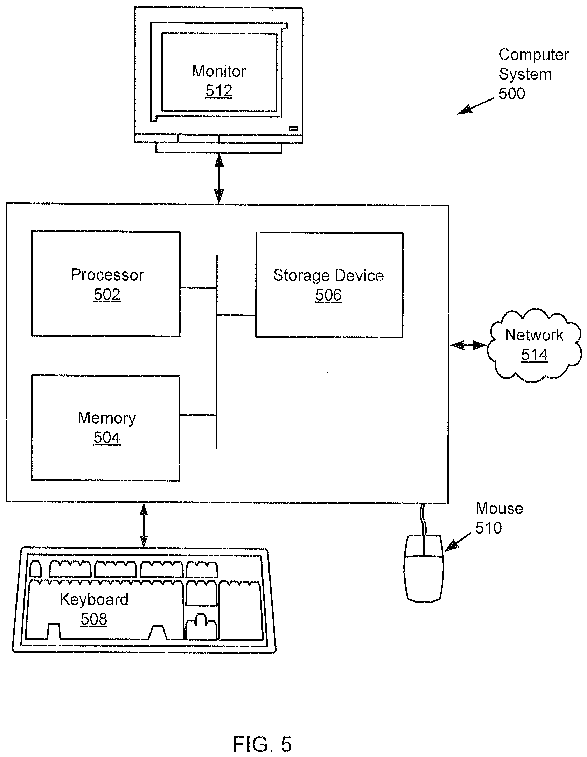

Embodiments of the invention may be implemented on virtually any type of computer regardless of the platform being used. For example, as shown in FIG. 5 , computer system (500) includes one or more processor(s) (502), associated memory (504) (e.g. random access memory (RAM), cache memory, flash memory, etc.), storage device (506) (e.g. a hard disk, an optical drive such as a compact disk drive or digital video disk (DVD) drive, a flash memory stick, etc.), and numerous other elements and functionalities typical of today's computers (not shown). In one or more embodiments of the invention, processor (502) is hardware. For example, the processor may be an integrated circuit. Computer system (500) may also include input means, such as keyboard (508), mouse (510), or a microphone (not shown). Further, computer system (500) may include output means, such as monitor (512) (e.g. a liquid crystal display (LCD), a plasma display, or cathode ray tube (CRT) monitor). Computer system (500) may be connected to network (514) (e.g. a local area network (LAN), a wide area network (WAN) such as the Internet, or any other type of network) via a network interface connection (not shown). In one or more embodiments of the invention, many different types of computer systems exist, and the aforementioned input and output means may take other forms. Generally speaking, computer system (500) includes at least the minimal processing, input, and/or output means necessary to practice embodiments of the invention.

Further, in one or more embodiments of the invention, one or more elements of the aforementioned computer system (500) may be located at a remote location and connected to the other elements over a network. Further, embodiments of the invention may be implemented on a distributed system having a plurality of nodes, where each portion of the invention (e.g. data structure, converter module, layout engine) may be located on a different node within the distributed system. In one embodiment of the invention, the node corresponds to a computer system. Alternatively, the node may correspond to a processor with associated physical memory. The node may alternatively correspond to a processor or micro-core of a processor with shared memory and/or resources. Further, software instructions in the form of computer readable program code to perform embodiments of the invention may be stored, temporarily or permanently, on a non-transitory computer readable storage medium, such as a compact disc (CD), a diskette, punch cards, a tape, memory, or any other computer readable storage device.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method for resolving references in electronic documents (115), wherein the method is performed by a page rendering device (125) to generate a hardcopy document from the electronic document, comprising following steps:
(a) obtaining an electronic document comprising a reference to an item within the electronic document;
(b) generating, based on the electronic document, an intermediate document for input into a layout engine (140);
(c) identifying, within a data structure external to the intermediate document, an entry comprising an initial value for the reference;
(d) calculating, by the layout engine and during a first rendering of the electronic document, a first page comprising the item, based on the intermediate document and the initial value substituted for the reference;
(e) populating the entry with a first page number corresponding to the first page;
**characterized in that** the method further comprises:
(f) calculating, by the layout engine and during a second rendering of the electronic document, a second page comprising the item, based on the intermediate document and the first page number substituted for the reference;
(g) populating the entry with a second page number corresponding to the second page;
(h) comparing if said first page number equals said second page number; and
(i) if said first page number equals said second page number, generating, using the layout engine a rendered document (145) of a hardcopy document, based on the intermediate document and the second page number substituted for the reference.

2. The method of claim 1, wherein the electronic document is defined using an extensible markup language.

3. The method of claim 1, wherein the page rendering device comprises the layout engine and the data structure.

4. The method of claim 1, further comprising:
identifying, within the electronic document, an occurrence of a page break associated with a user application; and
setting, before calculating the first page, the initial value in the entry based on the page break.

5. The method of claim 1, further comprising:
modifying, in response to the first page number equaling the second page number, the electronic document to include the second page number for the reference; and
generating a second rendered document for the electronic document using the second page number as the initial value.

6. The method of claim 1, wherein the data structure is an array.

7. The method of claim 1, wherein the electronic document comprises a table of contents, and wherein the table of contends comprises the reference.

8. A non-transitory computer readable storage medium storing instructions to perform a method for resolving references in electronic documents (115), wherein the method is performed by a page rendering device (125) to generate a hardcopy document from the electronic document, the instructions comprising functionality to:
(a) obtain an electronic document comprising a reference to an item within the electronic document;
(b) generate, based on the electronic document, an intermediate document for input into a layout engine (140);
(c) identify, within a data structure external to the intermediate document, an entry comprising an initial value for the reference;
(d) submit, to the layout engine, the intermediate document and the initial value substituted for the reference, wherein the layout engine calculates a first page comprising the item during a first rendering of the electronic document;
(e) populate the entry with a first page number corresponding to the first page;
**characterized in that** the instructions further comprises functionality to
(f) submit, to the layout engine, the intermediate document and the first page number substituted for the reference, wherein the layout engine calculates a second page comprising the item during a second rendering of the electronic document; and
(g) populate the entry with a second page number corresponding to the second page;
(h) compare if said first page number equals said second page number; and
(i) if said first page number equals said second page number, generate using the layout engine a rendered document (145) of a hardcopy document based on the intermediate document and the second page number substituted for the reference.

9. The non-transitory computer readable storage medium of claim 8, wherein the electronic document is defined using an extensible markup language.

10. The non-transitory compute readable storage medium of claim 8, wherein the page rendering device comprises the layout engine and the data structure.

11. The non-transitory computer readable storage medium of claim 8, the instructions further comprising functionality to:
identify, within the electronic document, an occurrence of a page break associated with a user application; and
set, before calculating the first page, the initial value in the entry based on the page break.

12. The non-transitory computer readable storage medium of claim 8, the instructions further comprising to:
modify, in response to the first page number equaling the second page number, the electronic document to include the second page number for the reference; and
generate a second rendered document for the electronic document using the second page number as the initial value.

13. The non-transitory computer readable storage medium of claim 8, wherein the data structure is an array.

14. The non-transitory computer readable storage medium of claim 8, wherein the electronic document comprises a table of contents, and wherein the table of contents comprises the reference.

15. A system for resolving references in electronic documents, comprising a page rendering device (125) to generate a hardcopy document from the electronic document:
a hardware processor;
wherein the system is configured to obtain an electronic document comprising a reference to an item within the electronic document;
a convertor module (135) executing on the hardware processor and configured to generate an intermediate document based on the electronic document for input into a layout engine (140); ;
wherein the system is configured to identify, within a data structure external to the intermediate document, an entry comprising an initial value for the reference;
a layout engine (140) executing on the hardware processor and configured to: calculate, during a first rendering of the electronic document, a first page comprising the item based on the intermediate document and the initial value substituted for the reference; and
populate the entry with a first page number corresponding to the first page;
**characterized in that**
calculate, during a second rendering of the electronic document, a second page comprising the item based on the intermediate document and the first page number substituted for the reference;
populate the entry with a second page number corresponding to the second page;
and
a data structure external to the ID and comprising an entry storing the initial value, the first page number, and the second page number
the layout engine is further configured to:
compare if said first page number equals said second page number; and
if said first page number equals said second page number, generating, using the layout engine a rendered document (145) of a hardcopy document, based on the intermediate document and the second page number substituted for the reference.

16. The system of claim 15, wherein the electronic document is defined using an extensible markup language.

17. The system of claim 15, further comprising:
a user application configured to record an occurrence of a page break in the electronic document, wherein the initial value is set based on the page break.

18. The system of claim 15, wherein the layout engine is further configured to:
modify, in response to the first page number equaling the second page number, the electronic document to include the second page number for the reference; and
generate a second rendered document for the electronic document using the second page number as the initial value.

19. The system of claim 15, wherein the convertor module (135), the layout engine (140), and the data structure (130) are located on the page rendering device (125).

20. The system of claim 15, wherein the electronic document comprises a table of contends, and wherein the table of contends comprises the reference.

## Patentansprüche

1. Verfahren zum Auflösen von Verweisen in elektronischen Dokumenten (115), wobei das Verfahren durch eine Seitenerstellungsvorrichtung (125) durchgeführt wird, um ein Hardcopy-Dokument aus dem elektronischen Dokument zu erzeugen, umfassend die folgenden Schritte:
(a) Erhalten eines elektronischen Dokuments, das einen Verweis zu einem Element innerhalb des elektronischen Dokuments umfasst;
(b) Erzeugen, auf der Basis des elektronischen Dokuments, eines Zwischendokuments zur Eingabe in eine Layouteinheit (140);
(c) Identifizieren eines Eintrags, der einen Anfangswert für den Verweis umfasst, innerhalb einer in Bezug auf das Zwischendokument externen Datenstruktur;
(d) Berechnen, durch die Layouteinheit und während einer ersten Erstellung des elektronischen Dokuments, einer ersten Seite, die das Element umfasst, basierend auf dem Zwischendokument und dem Anfangswert, mit dem der Verweis ersetzt wird;
(e) Einpflegen einer ersten Seitenzahl, die der ersten Seite entspricht, in den Eintrag;
**dadurch gekennzeichnet, dass** das Verfahren des Weiteren umfasst:
(f) Berechnen, durch die Layouteinheit und während einer zweiten Erstellung des elektronischen Dokuments, einer zweiten Seite, die das Element umfasst, basierend auf dem Zwischendokument und der ersten Seitenzahl, mit der der Verweis ersetzt wird;
(g) Einpflegen einer zweiten Seitenzahl, die der zweiten Seite entspricht, in den Eintrag;
(h) Vergleichen, ob die erste Seitenzahl gleich der zweiten Seitenzahl ist; und
(i) falls die erste Seitenzahl gleich der zweiten Seitenzahl ist, Erzeugen eines erstellten Dokuments (145) eines Hardcopy-Dokuments unter Verwendung der Layouteinheit, basierend auf dem Zwischendokument und der zweiten Seitenzahl, mit der der Verweis ersetzt wird.

2. Verfahren nach Anspruch 1, wobei das elektronische Dokument unter Verwendung einer Extensible Markup Language (einer erweiterbaren Auszeichnungssprache) definiert wird.

3. Verfahren nach Anspruch 1, wobei die Seitenerstellungsvorrichtung die Layouteinheit und die Datenstruktur umfasst.

4. Verfahren nach Anspruch 1, des Weiteren umfassend:
Identifizieren eines Auftretens eines mit einer Nutzeranwendung assoziierten Seitenumbruchs innerhalb des elektronischen Dokuments; und
Einstellen des Anfangswerts in dem Eintrag auf der Basis des Seitenumbruchs vor dem Berechnen der ersten Seite.

5. Verfahren nach Anspruch 1, des Weiteren umfassend:
Modifizieren des elektronischen Dokuments, so dass es die zweite Seitenzahl für den Verweis umfasst, als Reaktion darauf, dass die erste Seitenzahl gleich der zweiten Seitenzahl ist; und
Erzeugen eines zweiten erstellten Dokuments für das elektronische Dokument unter Verwendung der zweiten Seitenzahl als Anfangswert.

6. Verfahren nach Anspruch 1, wobei die Datenstruktur ein Array ist.

7. Verfahren nach Anspruch 1, wobei das elektronische Dokument eine Inhaltstabelle umfasst, und wobei die Inhaltstabelle den Verweis umfasst.

8. Nicht-transitorisches, computerlesbares Speichermedium, das Befehle zum Durchführen eines Verfahrens zum Auflösen von Verweisen in elektronischen Dokumenten (115) speichert,
wobei das Verfahren durch eine Seitenerstellungsvorrichtung (125) durchgeführt wird, um ein Hardcopy-Dokument aus dem elektronischen Dokument zu erzeugen, wobei die Befehle eine Funktionalität für das Folgende umfassen:
(a) Erhalten eines elektronischen Dokuments, das einen Verweis zu einem Element innerhalb des elektronischen Dokuments umfasst;
(b) Erzeugen, auf der Basis des elektronischen Dokuments, eines Zwischendokuments zur Eingabe in eine Layouteinheit (140);
(c) Identifizieren eines Eintrags, der einen Anfangswert für den Verweis umfasst, innerhalb einer in Bezug auf das Zwischendokument externen Datenstruktur;
(d) Übergeben des Zwischendokuments und des Anfangswerts, mit dem der Verweis ersetzt wird, an die Layouteinheit, wobei die Layouteinheit eine erste Seite, die das Element umfasst, während einer ersten Erstellung des elektronischen Dokuments berechnet;
(e) Einpflegen einer ersten Seitenzahl, die der ersten Seite entspricht, in den Eintrag;
**dadurch gekennzeichnet, dass** die Befehle des Weiteren eine Funktionalität für das Folgende umfassen:
(f) Übergeben des Zwischendokuments und der ersten Seitenzahl, mit dem der Verweis ersetzt wird, an die Layouteinheit, wobei die Layouteinheit eine zweite Seite, die das Element umfasst, während einer zweiten Erstellung des elektronischen Dokuments berechnet; und
(g) Einpflegen einer zweiten Seitenzahl, die der zweiten Seite entspricht, in den Eintrag;
(h) Vergleichen, ob die erste Seitenzahl gleich der zweiten Seitenzahl ist; und
(i) falls die erste Seitenzahl gleich der zweiten Seitenzahl ist, Erzeugen eines erstellten Dokuments (145) eines Hardcopy-Dokuments unter Verwendung der Layouteinheit, basierend auf dem Zwischendokument und der zweiten Seitenzahl, mit der der Verweis ersetzt wird,

9. Nicht-transitorisches, computerlesbares Speichermedium nach Anspruch 8, wobei das elektronische Dokument unter Verwendung einer Extensible Markup Language (einer erweiterbaren Auszeichnungssprache) definiert wird.

10. Nicht-transitorisches, computerlesbares Speichermedium nach Anspruch 8, wobei die Seitenerstellungsvorrichtung die Layouteinheit und die Datenstruktur umfasst.

11. Nicht-transitorisches, computerlesbares Speichermedium nach Anspruch 8, wobei die Befehle des Weiteren eine Funktionalität für das Folgende umfassen:
Identifizieren eines Auftretens eines mit einer Nutzeranwendung assoziierten Seitenumbruchs innerhalb des elektronischen Dokuments; und
Einstellen des Anfangswerts in dem Eintrag auf der Basis des Seitenumbruchs vor dem Berechnen der ersten Seite.

12. Nicht-transitorisches, computerlesbares Speichermedium nach Anspruch 8, wobei die Befehle des Weiteren umfassen:
Modifizieren des elektronischen Dokuments, so dass es die zweite Seitenzahl für den Verweis umfasst, als Reaktion darauf, dass die erste Seitenzahl gleich der zweiten Seitenzahl ist; und
Erzeugen eines zweiten erstellten Dokuments für das elektronische Dokument unter Verwendung der zweiten Seitenzahl als Anfangswert.

13. Nicht-transitorisches, computerlesbares Speichermedium nach Anspruch 8, wobei die Datenstruktur ein Array ist.

14. Nicht-transitorisches, computerlesbares Speichermedium nach Anspruch 8, wobei das elektronische Dokument eine Inhaltstabelle umfasst, und wobei die Inhaltstabelle den Verweis umfasst.

15. System zum Auflösen von Verweisen in elektronischen Dokumenten, das umfasst: eine Seitenerstellungsvorrichtung (125), um ein Hardcopy-Dokument aus dem elektronischen Dokument zu erzeugen:
einen Hardware-Prozessor;
wobei das System ausgebildet ist, ein elektronisches Dokument zu erhalten, das einen Verweis zu einem Element innerhalb des elektronischen Dokuments umfasst;
ein Umwandlermodul (135), das auf dem Hardware-Prozessor läuft und ausgebildet ist, ein Zwischendokument auf der Basis des elektronischen Dokuments zur Eingabe in eine Layouteinheit (140)zu erzeugen;
wobei das System ausgebildet ist, einen Eintrag, der einen Anfangswert für den Verweis umfasst, innerhalb einer in Bezug auf das Zwischendokument externen Datenstruktur zu identifizieren;
eine Layouteinheit (140), die auf dem Hardware-Prozessor läuft und für das Folgende ausgebildet ist: Berechnen, während einer ersten Erstellung des elektronischen Dokuments, einer ersten Seite, die das Element umfasst, basierend auf dem Zwischendokument und dem Anfangswert, mit dem der Verweis ersetzt wird; und
Einpflegen einer ersten Seitenzahl, die der ersten Seite entspricht, in den Eintrag;
**gekennzeichnet durch**
Berechnen, während einer zweiten Erstellung des elektronischen Dokuments, einer zweiten Seite, die das Element umfasst, basierend auf dem Zwischendokument und der ersten Seitenzahl, mit der der Verweis ersetzt wird;
Einpflegen einer zweiten Seitenzahl, die der zweiten Seite entspricht, in den Eintrag;
und
eine in Bezug auf das ID externe Datenstruktur, die einen Eintrag umfasst, der den Anfangswert, die erste Seitenzahl und die zweite Seitenzahl speichert,
die Layouteinheit ist des Weiteren für das Folgende ausgebildet:
Vergleichen, ob die erste Seitenzahl gleich der zweiten Seitenzahl ist; und
falls die erste Seitenzahl gleich der zweiten Seitenzahl ist, Erzeugen eines erstellten Dokuments (145) eines Hardcopy-Dokuments unter Verwendung der Layouteinheit, basierend auf dem Zwischendokument und der zweiten Seitenzahl, mit der der Verweis ersetzt wird.

16. System nach Anspruch 15, wobei das elektronische Dokument unter Verwendung einer Extensible Markup Language (einer erweiterbaren Auszeichnungssprache) definiert wird.

17. System nach Anspruch 15, das des Weiteren umfasst:
eine Nutzeranwendung, die ausgebildet ist, ein Auftreten eines Seitenumbruchs in dem elektrischen Dokument aufzuzeichnen, wobei der Anfangswert basierend auf dem Seitenumbruch eingestellt wird.

18. System nach Anspruch 15, wobei die Layouteinheit des Weiteren für das Folgende ausgebildet ist:
Modifizieren des elektronischen Dokuments, so dass es die zweite Seitenzahl für den Verweis umfasst, als Reaktion darauf, dass die erste Seitenzahl gleich der zweiten Seitenzahl ist; und
Erzeugen eines zweiten erstellten Dokuments für das elektronische Dokument unter Verwendung der zweiten Seitenzahl als Anfangswert,

19. System nach Anspruch 15, wobei das Umwandlermodul (135), die Layouteinheit (140) und die Datenstruktur (130) sich auf der Seitenerstellungsvorrichtung (125) befinden.

20. System nach Anspruch 15, wobei das elektronische Dokument eine Inhaltstabelle umfasst, und wobei die Inhaltstabelle den Verweis umfasst.

## Revendications

1. Procédé de résolution des références de page dans des documents électroniques (115), dans lequel le procédé est effectué par un dispositif d'affichage de pages (125) pour générer un document papier à partir du document électronique, comprenant les étapes suivantes de :
(a) obtenir un document électronique comprenant une référence à un élément dans le document électronique ;
(b) sur la base du document électronique, générer un document intermédiaire pour l'entrer dans un moteur d'affichage (140) ;
(c) identifier une entrée comprenant une valeur initiale pour la référence à l'intérieur d'une structure de données extérieure du document intermédiaire ;
(d) calculer une première page comprenant l'élément par le moteur d'affichage et pendant un premier affichage du document électronique, sur la base du document intermédiaire et de la valeur initiale substituée pour la référence ;
(e) munir l'entrée d'un premier numéro de page correspondant à la première page ;
**caractérisé en ce que** le procédé comprend en outre les étapes de :
(f) calculer une deuxième page comprenant l'élément par le moteur d'affichage et pendant un deuxième affichage du document électronique, sur la base du document intermédiaire et le premier numéro de page substitué pour la référence ;
(g) munir l'entrée d'un deuxième numéro de page correspondant à la deuxième page :
(h) comparer si ledit premier numéro de page est égale audit deuxième numéro de page ; et
(i) si ledit premier numéro de page est égale audit deuxième numéro de page, générer un document affiché (145) d'un document papier en utilisant le moteur d'affichage, sur la base du document intermédiaire et du deuxième numéro de page substitué pour la référence.

2. Procédé selon la revendication 1, dans lequel le document électronique est défini par l'usage d'un langage de balisage extensible.

3. Procédé selon la revendication 1, dans lequel le dispositif d'affichage de pages comprend le moteur d'affichage et la structure de données.

4. Procédé selon la revendication 1, comprenant en outre les étapes de :
identifier une survenance d'un saut de page associée à une application d'un utilisateur dans le document électronique ; et
fixer, avant de calculer la première page, la valeur initiale dans l'entrée sur la base du saut de page.

5. Procédé selon la revendication 1, comprenant en outre les étapes de :
modifier, en réaction au fait que le premier numéro de page est égale au deuxième numéro de page, le document électronique de sorte qu'il comprend le deuxième numéro de page pour la référence ; et
générer un deuxième document affiché pour le document électronique en utilisant le deuxième numéro de page comme valeur initiale.

6. Procédé selon la revendication 1, dans lequel la structure de données est un éventail.

7. Procédé selon la revendication 1, dans lequel le document électronique comprend une table de matières, et dans lequel la table de matières comprend la référence.

8. Support d'enregistrement non transitoire et lisible par ordinateur, qui stocke des instructions pour effectuer un procédé de résolution des références dans des documents électroniques (115), dans lequel le procédé est effectué par un dispositif d'affichage de pages (125) pour générer un document papier à partir du document électronique, les instructions fonctionnant pour :
(a) obtenir un document électronique comprenant une référence à un élément dans le document électronique ;
(b) sur la base du document électronique, générer un document intermédiaire pour l'entrer dans un moteur d'affichage (140) ;
(c) identifier une entrée comprenant une valeur initiale pour la référence à l'intérieur d'une structure de données extérieure du document intermédiaire ;
(d) soumettre le document intermédiaire et la valeur initiale substituée pour la référence au moteur d'affichage, le moteur d'affichage calculant une première page comprenant l'élément pendant un premier affichage du document électronique ;
(e) munir l'entrée d'un premier numéro de page correspondant à la première page ;
**caractérisé en ce que** les instructions ont en outre la fonction de :
(f) soumettre le document intermédiaire et le premier numéro de page substitué pour la référence au moteur d'affichage, le moteur d'affichage calculant une deuxième page comprenant l'élément pendant un deuxième affichage du document électronique ; et
(g) munir l'entrée d'un deuxième numéro de page correspondant à la deuxième page ;
(h) comparer si ledit premier numéro de page est égale audit deuxième numéro de page ; et
(i) si ledit premier numéro de page est égale audit deuxième numéro de page, générer un document affiché (145) d'un document papier en utilisant le moteur d'affichage, sur la base du document intermédiaire et du deuxième numéro de page substitué pour la référence.

9. Support d'enregistrement non transitoire et lisible par ordinateur selon la revendication 8, dans lequel le document électronique est défini par l'usage d'un langage de balisage extensible.

10. Support d'enregistrement non transitoire et lisible par ordinateur selon la revendication 8, dans lequel le dispositif d'affichage de pages comprend le moteur d'affichage et la structure de données.

11. Support d'enregistrement non transitoire et lisible par ordinateur selon la revendication 8, les instructions ayant en outre la fonction de :
identifier une survenance d'un saut de page associée à une application d'un utilisateur dans le document électronique ; et
fixer, avant de calculer la première page, la valeur initiale dans l'entrée sur la base du saut de page.

12. Support d'enregistrement non transitoire et lisible par ordinateur selon la revendication 8, les instructions comprenant en outre les étapes de :
modifier, en réaction au fait que le premier numéro de page est égale au deuxième numéro de page, le document électronique de sorte qu'il comprend le deuxième numéro de page pour la référence ; et
générer un deuxième document affiché pour le document électronique en utilisant le deuxième numéro de page comme valeur initiale.

13. Support d'enregistrement non transitoire et lisible par ordinateur selon la revendication 8, dans lequel la structure de données est un éventail.

14. Support d'enregistrement non transitoire et lisible par ordinateur selon la revendication 8, dans lequel le document électronique comprend une table de matières, et dans lequel la table de matières comprend la référence.

15. Système de résolution des références dans des documents électroniques, comprenant un dispositif d'affichage de pages (125 pour générer un document papier à partir du document électronique ;
un processeur matériel ;
dans lequel le système est configuré pour obtenir un document électronique comprenant une référence à un élément dans le document électronique ;
un module convertisseur (135), qui exécute sur le processeur matériel et qui est configuré pour générer un document intermédiaire sur la base du document électronique, pour l'entrer dans un moteur d'affichage (140) ;
dans lequel le système est configuré pour identifier une entrée comprenant une valeur initiale pour la référence à l'intérieur d'une structure de données extérieure du document intermédiaire ;
un moteur d'affichage (140) exécutant sur le processeur matériel et configuré pour calculer une première page comprenant l'élément pendant un premier affichage du document électronique, sur la base du document intermédiaire et de la valeur initiale substituée pour la référence ; et
munir l'entrée d'un premier numéro de page correspondant à la première page ;
**caractérisé en ce qu'**il effectue les étapes de
calculer une deuxième page comprenant l'élément pendant un deuxième affichage du document électronique, sur la base du document intermédiaire et du premier numéro de page substitué pour la référence ;
munir l'entrée d'un deuxième numéro de page correspondant à la deuxième page :
et
une structure de données extérieure du document intermédiaire et comprenant une entrée, qui stocke la valeur initiale, le premier numéro de page et le deuxième numéro de page,
le moteur d'affichage étant en outre configuré pour
comparer si ledit premier numéro de page est égale audit deuxième numéro de page ; et
si ledit premier numéro de page est égale audit deuxième numéro de page, générer un document affiché (145) d'un document papier en utilisant le moteur d'affichage, sur la base du document intermédiaire et du deuxième numéro de page substitué pour la référence.

16. Système selon la revendication 15, dans lequel le document électronique est défini par l'usage d'un langage de balisage extensible.

17. Système selon la revendication 15, comprenant en outre ;
une application d'utilisateur configurée pour enregistrer une survenance d'un saut de page dans le document électronique, la valeur initiale étant fixée sur la base du saut de page,

18. Système selon la revendication 15, dans lequel le moteur d'affichage est en outre configuré pour :
modifier, en réaction au fait que le premier numéro de page est égale au deuxième numéro de page, le document électronique de sorte qu'il comprend le deuxième numéro de page pour la référence ; et
générer un deuxième document affiché pour le document électronique en utilisant le deuxième numéro de page comme valeur initiale.

19. Système selon la revendication 15, dans lequel le module convertisseur (135), le moteur d'affichage (140) et la structure de données (130) sont disposés sur le dispositif d'affichage de pages (125).

20. Système selon la revendication 15, dans lequel le document électronique comprend une table de matières, et dans lequel la table de matières comprend la référence.
